(19) Europäisches Patentamt
European Patent Office
Office européen des brevets

(11) **EP 2 997 287 B1**

(12) **FASCICULE DE BREVET EUROPEEN**

(45) Date de publication et mention
de la délivrance du brevet:
**05.09.2018 Bulletin 2018/36**

(21) Numéro de dépôt: **14727874.1**

(22) Date de dépôt: **30.04.2014**

(51) Int Cl.:
***F16H 47/04*** *(2006.01)*

(86) Numéro de dépôt international:
**PCT/FR2014/051037**

(87) Numéro de publication internationale:
**WO 2014/184461 (20.11.2014 Gazette 2014/47)**

(54) **TRANSMISSION POUR VEHICULE HYBRIDE HYDRAULIQUE, COMPORTANT UN TRAIN PLANETAIRE RELIE A UNE POMPE PAR UN REDUCTEUR DE VITESSE**

GETRIEBE FÜR EIN HYDRAULISCHES HYBRIDFAHRZEUG MIT EINEM PLANETENGETRIEBE VERBUNDEN MIT EINER PUMPE DURCH EINEN DREHZAHLMINDERER

TRANSMISSION FOR A HYDRAULIC HYBRID VEHICLE, COMPRISING A PLANETARY GEAR TRAIN LINKED TO A PUMP BY A SPEED REDUCER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2013 FR 1354409**

(43) Date de publication de la demande:
**23.03.2016 Bulletin 2016/12**

(73) Titulaire: **Technoboost**
**75116 Paris (FR)**

(72) Inventeurs:
• **BALENGHIEN, Olivier**
**F-93340 Le Raincy (FR)**

• **SIROT, Jean Christian**
**F-75019 Paris (FR)**

(74) Mandataire: **Rosenberg, Muriel Sylvie**
**PSA Automobiles SA**
**VPIB - LG081**
**18 rue des Fauvelles**
**92250 La Garenne Colombes (FR)**

(56) Documents cités:
**EP-A1- 0 559 003      WO-A1-2012/006492**
**DE-A1- 3 707 382      FR-A1- 2 970 440**
**US-A- 4 895 049**

**Description**

La présente invention concerne une transmission pour un véhicule automobile hybride permettant de réduire le niveau sonore d'une pompe hydraulique entraînée par cette transmission, elle concerne aussi un procédé d'estimation du niveau sonore d'une machine hydraulique, ainsi qu'un véhicule automobile hybride comportant une telle transmission.

Un type de transmission connu pour un véhicule automobile hybride hydraulique, présenté notamment par le document FR-A1-2973302, comporte une première entrée liée à un moteur thermique et une deuxième entrée liée à une pompe hydraulique, ce moteur et cette pompe alignés sur un même axe étant disposés de chaque côté d'un train planétaire intégré dans la transmission. Cette transmission comporte de plus une troisième entrée liée à une machine hydraulique, ainsi qu'une sortie par un différentiel entraînant les deux roues motrices du véhicule.

La machine hydraulique peut être reliée au différentiel par deux rapports de démultiplication différents, commandés par un premier manchon de synchronisation.

Le moteur thermique entraîne la couronne extérieure du train planétaire disposé suivant l'axe de ce moteur, comprenant un pignon solaire relié directement à la pompe hydraulique. Le porte-satellites du train planétaire peut être lié au pignon solaire par un deuxième manchon de synchronisation, afin de réaliser un blocage de ce train planétaire donnant la même vitesse à ses éléments. Le porte-satellites peut aussi être relié au différentiel de sortie par un troisième manchon de synchronisation.

La machine hydraulique ainsi que la pompe sont connectés à des accumulateurs de pression, qui permettent de stocker une énergie lors du fonctionnement de cette pompe délivrant un couple de freinage, et de la restituer à la machine hydraulique pour délivrer un couple moteur sur les roues motrices.

Dans un mode de fonctionnement avec le porte-satellites bloqué, la pompe tourne à la même vitesse que le moteur thermique. Dans un autre mode de fonctionnement avec le porte-satellites travaillant comme un différentiel, la pompe tourne en sens inverse par rapport au moteur thermique en générant un couple de freinage, avec une vitesse qui peut être inférieure ou supérieure à celle de ce moteur.

La pompe reçoit avec une vitesse de rotation relativement élevée, et une cylindrée calculée en fonction de cette vitesse, une puissance mécanique dépendant du produit de cette vitesse par cette cylindrée, qui est utilisée pour générer la pression hydraulique de recharge des accumulateurs de pression.

Par ailleurs, un type de pompe hydraulique connu comporte des cylindres disposés parallèlement à l'axe et répartis autour de cet axe, comprenant des pistons activés par un plateau entraîné en rotation, inclinable autour d'un axe perpendiculaire à l'axe de rotation.

Un problème qui se pose avec ce type de pompe utilisé pour les véhicules hybrides présentés ci-dessus, est que dans ces conditions de vitesse de rotation la pompe génère des vibrations et des bruits importants qui sont désagréables. En particulier des essais réalisés sur un prototype de ce véhicule, ont montré que le niveau sonore émis par la pompe est supérieur d'environ 10dBa à une limite admissible.

Pour réduire le niveau sonore de la pompe, une première solution connue consiste à réaliser une petite inclinaison du plateau suivant un deuxième axe perpendiculaire au premier axe d'inclinaison, afin de lisser les montées en pression dans les pistons permettant de réduire l'excitation sonore. Cependant cette solution apportant un gain d'environ 3 à 4dBa sur le bruit global de la pompe hydraulique, n'est pas suffisante.

Une autre solution connue consiste à réaliser un encapsulage de la pompe hydraulique, pour réduire ses émissions sonores. Cette solution comporte un problème d'encombrement important de l'encapsulage, qui la rend difficile à mettre en oeuvre.

La présente invention a notamment pour but d'éviter ces inconvénients de la technique antérieure.

Elle propose à cet effet une transmission pour un véhicule automobile hybride hydraulique, comportant un train planétaire pouvant travailler en différentiel comprenant un premier élément lié à un moteur thermique, un deuxième élément lié aux roues motrices, et un troisième élément lié à une pompe hydraulique, cette transmission comportant de plus un moyen d'entraînement des roues motrices par une machine hydraulique, caractérisée en ce que la liaison entre le troisième élément du train planétaire et la pompe hydraulique, comporte un réducteur de vitesse donnant quand l'ensemble de ce train tourne à la même vitesse, une réduction de la vitesse de rotation de la pompe par rapport à celle du moteur thermique qui est supérieure à une valeur d'environ deux.

Un avantage de cette transmission est qu'en ajoutant un réducteur de vitesse entre le troisième élément du train planétaire et la pompe hydraulique, on obtient une réduction par au moins deux de la vitesse de cette pompe par rapport à celle du moteur thermique quand le train planétaire est bloqué, ce qui diminue de manière importante les émissions sonores de la pompe. On obtient aussi la même réduction de la vitesse de la pompe quand le train planétaire travaille en différentiel.

En complément, la réduction de vitesse peut être compensée par une augmentation de la cylindrée de la pompe de manière sensiblement proportionnelle à ce rapport de réduction, afin de maintenir une puissance équivalente.

La transmission selon l'invention peut de plus comporter une ou plusieurs des caractéristiques suivantes, qui peuvent être combinées entre elles.

Avantageusement, le réducteur de vitesse comporte deux arbres parallèles formant l'entrée et la sortie de ce réducteur.

En particulier, l'arbre d'entrée du réducteur directement lié au troisième élément du train planétaire, peut porter un pignon engrenant avec un pignon porté par un arbre directement lié à la pompe, ce couple de pignons donnant le rapport de réduction.

En particulier, le rapport de réduction peut être d'environ 2,2.

En particulier, le premier élément du train planétaire peut être la couronne, le deuxième élément le porte-satellites et le troisième élément le pignon solaire.

Avantageusement, le train planétaire comporte un moyen de blocage.

L'invention a aussi pour objet un procédé d'évaluation du niveau sonore d'une machine hydraulique à pistons axiaux, permettant d'évaluer ce niveau sonore en connaissant la vitesse de rotation ainsi que la cylindrée de cette machine, qui calcule ce niveau par une formule du type :

$$X \times Log10 \text{ (Vitesse en tr/min)} + Y \times Log10 \text{ (Cylindrée en cm}^3\text{)} + K = \text{Niveau acoustique en dBa ;}$$

avec une constante K dépendant de la technologie utilisée pour cette machine.

En particulier, la valeur « X » peut être sensiblement égale à vingt, et la valeur « Y » sensiblement égale à trois.

En particulier, la constante « K » peut être comprise entre cinq et quinze.

L'invention a aussi pour objet un procédé d'évaluation du niveau sonore d'une machine hydraulique à pistons axiaux disposée dans une transmission pour un véhicule automobile hybride hydraulique, comportant un train planétaire pouvant travailler en différentiel, comprenant un premier élément lié à un moteur thermique, un deuxième élément lié aux roues motrices, et un troisième élément lié à une pompe hydraulique, cette transmission comportant de plus un moyen d'entraînement des roues motrices par une machine hydraulique et la liaison entre le troisième élément du train planétaire et la pompe hydraulique comportant un réducteur de vitesse donnant quand l'ensemble de ce train tourne à la même vitesse, une réduction de la vitesse de rotation de la pompe par rapport à celle du moteur thermique, la transmission comportant en outre un différentiel de sortie, et la liaison entre le différentiel de sortie et la machine hydraulique comportant un réducteur de vitesse donnant quand la machine hydraulique entraîne les roues motrices, une réduction de la vitesse de rotation de la machine hydraulique, ce procédé permettant d'évaluer ce niveau sonore en connaissant la vitesse de rotation ainsi que la cylindrée de cette machine, remarquable en ce qu'il calcule ce niveau par une formule du type :

$$X' \times Log10 \text{ (Vitesse en tr/min)} + Y' \times Log10 \text{ (Cylindrée en cm}^3\text{)} + K' = \text{Niveau acoustique en dBa ;}$$

avec une constante K' dépendant de la technologie utilisée pour cette machine.

L'invention a de plus pour objet une transmission pour un véhicule automobile hybride hydraulique, comportant un train planétaire pouvant travailler en différentiel, comprenant un premier élément lié à un moteur thermique, un deuxième élément lié aux roues motrices, et un troisième élément lié à une pompe hydraulique, cette transmission comportant de plus un moyen d'entraînement des roues motrices par une machine hydraulique et la liaison entre le troisième élément du train planétaire et la pompe hydraulique comportant un réducteur de vitesse donnant quand l'ensemble de ce train tourne à la même vitesse, une réduction de la vitesse de rotation de la pompe par rapport à celle du moteur thermique, la transmission comportant en outre un différentiel de sortie, et la liaison entre le différentiel de sortie et la machine hydraulique comportant un réducteur de vitesse donnant quand la machine hydraulique entraîne les roues motrices, une réduction de la vitesse de rotation de la machine hydraulique, cette transmission étant remarquable en ce que la valeur de cette réduction est choisie en fonction d'un niveau sonore de la machine hydraulique évalué suivant un procédé tel que succinctement défini ci-dessus.

L'invention a de plus pour objet un véhicule automobile hybride disposant d'une transmission comportant un train planétaire relié à un moteur thermique et à une pompe hydraulique, cette transmission comprenant l'une quelconque des caractéristiques précédentes.

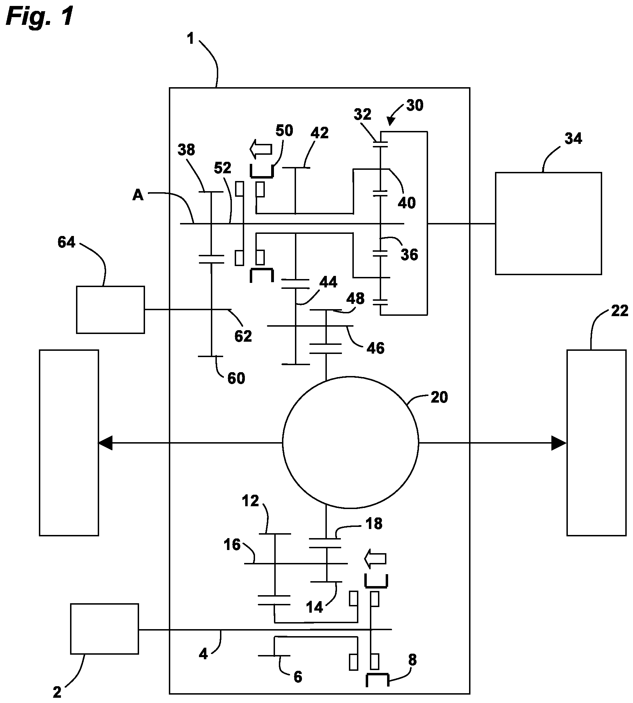

L'invention sera mieux comprise et d'autres caractéristiques et avantages apparaîtront plus clairement à la lecture de la description ci-après donnée à titre d'exemple, en référence au dessin annexé de la figure 1 qui est un schéma d'une transmission selon l'invention.

La figure 1 présente une transmission 1 comprenant six arbres disposés parallèlement entre eux. Une machine hydraulique à cylindrée variable 2 est reliée à un premier arbre d'entrée 4 de cette transmission, supportant un pignon menant libre en rotation 6 qui peut être lié à cet arbre d'entrée par un premier manchon de synchronisation 8 quand il est engagé.

Le pignon menant 6 du premier arbre d'entrée 4 engrène avec un pignon mené 12 qui est lié à un premier arbre intermédiaire 16, comportant un premier pignon de sortie 14 fixé dessus. Ce premier pignon de sortie 14 engrène avec la couronne 18 d'un différentiel de sortie 20, répartissant le mouvement vers les deux roues motrices 22 du véhicule.

On obtient ainsi la possibilité d'entraîner directement les roues motrices du véhicule 22 par la machine hydraulique 2, quand le premier manchon de synchronisation 8 est engagé.

Un moteur thermique 34 disposé suivant un axe principal A, entraîne directement la couronne extérieure 32 d'un train planétaire 30 disposé suivant le même axe, comprenant un pignon solaire central 36 qui est fixé à un arbre 52 supportant un pignon fixe 38 à son extrémité opposée à ce moteur.

Le train planétaire 30 comporte un porte-satellites 40 comprenant des pignons satellites engrenant à la fois sur la couronne 32 et le pignon solaire 36, ce porte-satellites étant lié à un pignon fixe menant 42.

Un deuxième manchon de synchronisation 50 disposé axialement entre le pignon fixe menant 42 du porte-satellites 40, et le pignon fixe 38 de l'arbre 52 du pignon solaire 36, peut lier ce porte-satellites avec ce pignon solaire quand il est engagé. Le train planétaire 30 est alors bloqué, ses éléments tournant à la même vitesse.

Le pignon fixe menant 42 du porte-satellites 40, engrène avec un pignon fixe mené 44 qui est lié à un deuxième arbre intermédiaire 46 comportant un deuxième pignon de sortie 48 fixé dessus. Ce deuxième pignon de sortie 48 engrène avec la couronne 18 du différentiel de sortie 20.

On obtient ainsi la possibilité d'entraîner directement les roues motrices du véhicule 22 par le moteur thermique 34, quand le deuxième manchon de synchronisation 50 est engagé. La liaison entre le moteur thermique 34 et les roues motrices 22 se fait alors avec un rapport de démultiplication défini par les deux engrènements successifs, comportant une faible démultiplication. Ce rapport est le rapport le plus long, il est mis en oeuvre pour les vitesses élevées du véhicule, avec un bon rendement car utilisant uniquement une transmission mécanique comprenant seulement deux engrènements.

Le pignon fixe 38 de l'arbre 52 engrène avec un pignon mené 60 fixé à un arbre de pompe 62 lié en permanence à une pompe hydraulique à cylindrée variable 64.

Quand le deuxième manchon de synchronisation 50 est désengagé, le train planétaire 30 agit comme un différentiel qui répartit le couple délivré par le moteur thermique 34, donnant un premier couple appliqué par le porte-satellites 40 sur le différentiel de sortie 20, et un deuxième couple appliqué par le pignon solaire 36 sur la pompe 64.

La pompe 64 ainsi que la machine hydraulique 2 sont reliés à des accumulateurs haute pression et basse pression, qui constituent des réserves d'énergie.

Le pignon fixe menant 38 de l'arbre 52 du pignon solaire 36 et le pignon fixé mené 60 de l'arbre de pompe 62, constituent un réducteur de vitesse qui dans cet exemple réduit la vitesse de rotation de la pompe 64 suivant un rapport de 2.2. De cette manière lorsque le moteur thermique 34 a une vitesse de rotation de 3000tr/m, le deuxième manchon de synchronisation 50 étant engagé, la pompe 64 a une vitesse de rotation de 1364 tr/m.

Par la suite pour compenser la réduction de vitesse, afin d'obtenir une puissance mécanique sensiblement équivalente, on augmente alors la cylindrée de la pompe 64. On obtient ainsi une pompe 64 qui est moins bruyante.

Une série d'évaluations de plusieurs pompes hydrauliques proposées par différents fournisseurs, comportant des pistons disposés parallèlement à l'axe, a permis de déterminer un calcul mathématique donnant une prévision du niveau acoustique de ces machines, de la manière suivante :

$$20 \times \text{Log10 (Vitesse en tr/min)} + 3 \times \text{Log10 (Cylindrée en cm}^3) + K =$$

$$\text{Niveau acoustique en dBa ;}$$

la constante K étant comprise entre 5 et 15 suivant la technologie de la machine hydraulique.

En pratique avec ce procédé de calcul mathématique, pour une pompe hydraulique comportant une cylindrée de $17cm^3$ et tournant à la vitesse de 3000tr/m, avec une constante K = 9.8, on obtient un niveau sonore de 83dBa. Avec le même type de pompe comportant une cylindrée de 31 $cm^3$, disposée sur une transmission 1 selon l'invention comprenant le rapport de réduction de 2.2, on obtient un niveau sonore de 77dBa, qui est réduit d'environ 6dBa.

On notera que la cylindrée de la pompe 64 est multipliée par une valeur un peu inférieure à deux, qui est proche du rapport de réduction de l'entraînement de la pompe 64. Les pertes de la pompe 64 n'étant pas proportionnelles à sa cylindrée, la puissance mécanique de cette pompe ainsi que sa prestation sont similaires à celles de la pompe d'origine comprenant la cylindrée réduite et la vitesse plus importante.

De la même manière on peut aussi réduire la vitesse de la machine hydraulique 6 comportant des pistons radiaux afin de diminuer le bruit, en utilisant un procédé de calcul similaire permettant de prévoir son niveau sonore.

D'une manière générale on peut réaliser ainsi de manière simple avec ce procédé de calcul, une bonne estimation du niveau sonore d'une machine hydraulique comportant des pistons axiaux, en fonction de sa cylindrée et de sa vitesse de rotation, et calculer le rapport de réduction nécessaire pour l'entrainer.

**Revendications**

1. Procédé d'évaluation du niveau sonore d'une machine hydraulique à pistons axiaux disposée dans une transmission pour un véhicule automobile hybride hydraulique, comportant un train planétaire (30) pouvant travailler en différentiel, comprenant un premier élément (32) lié à un moteur thermique (34), un deuxième élément (40) lié aux roues motrices (22), et un troisième élément (36) lié à une pompe hydraulique (64), cette transmission (1) comportant de plus un moyen d'entraînement des roues motrices (8) par une machine hydraulique (2), et la liaison entre le troisième élément (36) du train planétaire (30) et la pompe hydraulique (64) comportant un réducteur de vitesse (38, 60) donnant quand l'ensemble de ce train tourne à la même vitesse, une réduction de la vitesse de rotation de la pompe par rapport à celle du moteur thermique (34), ledit procédé permettant d'évaluer ce niveau sonore en connaissant la vitesse de rotation ainsi que la cylindrée de cette machine, **caractérisé en ce qu'**il calcule ce niveau par une formule du type :

$$X \times Log10 \text{ (Vitesse en tr/min)} + Y \times Log10 \text{ (Cylindrée en cm}^3\text{)} + K = \text{Niveau acoustique en dBa ;}$$

avec une constante K dépendant de la technologie utilisée pour cette machine.

2. Procédé d'évaluation du niveau sonore selon la revendication 1, **caractérisé en ce que** la valeur « X » est sensiblement égale à vingt, et la valeur « Y » est sensiblement égale à trois.

3. Procédé d'évaluation du niveau sonore selon la revendication 1 ou 2, **caractérisé en ce que** la constante « K » est comprise entre cinq et quinze.

4. Procédé d'évaluation du niveau sonore selon la revendication 1, **caractérisé en ce que** ladite transmission comporte en outre un différentiel de sortie (20), et la liaison entre le différentiel de sortie (20) et la machine hydraulique (2) comporte un réducteur de vitesse (6, 12) donnant quand la machine hydraulique (2) entraîne les roues motrices (22), une réduction de la vitesse de rotation de la machine hydraulique (2).

5. Transmission pour un véhicule automobile hybride hydraulique, comportant un train planétaire (30) pouvant travailler en différentiel, comprenant un premier élément (32) lié à un moteur thermique (34), un deuxième élément (40) lié aux roues motrices (22), et un troisième élément (36) lié à une pompe hydraulique (64), cette transmission (1) comportant de plus un moyen d'entraînement des roues motrices (8) par une machine hydraulique (2), et la liaison entre le troisième élément (36) du train planétaire (30) et la pompe hydraulique (64) comportant un réducteur de vitesse (38, 60) donnant quand l'ensemble de ce train tourne à la même vitesse, une réduction de la vitesse de rotation de la pompe par rapport à celle du moteur thermique (34), ladite transmission étant **caractérisée en ce que** la valeur de ladite réduction est choisie en fonction d'un niveau sonore de la machine hydraulique (2) évalué suivant un procédé selon la revendication 1, 2 ou 3.

6. Transmission selon la revendication 5, **caractérisée en ce que** le réducteur de vitesse comporte deux arbres parallèles (52, 62) formant l'entrée et la sortie de ce réducteur.

7. Transmission selon la revendication 6, **caractérisée en ce que** l'arbre d'entrée du réducteur (52) directement lié au troisième élément (36) du train planétaire (30), porte un pignon (38) engrenant avec un pignon (60) porté par un arbre (62) directement lié à la pompe (64), ce couple de pignons donnant le rapport de réduction.

8. Transmission selon l'une quelconque des revendications 5 à 7, **caractérisée en ce que** le rapport de réduction est d'environ 2,2.

9. Transmission selon l'une quelconque des revendications 5 à 8, **caractérisée en ce que** le premier élément du train planétaire (30) est la couronne (32), le deuxième élément est le porte-satellites (40), et le troisième élément est le pignon solaire (36).

10. Transmission selon l'une quelconque des revendications précédentes, **caractérisée en ce que** le train planétaire (30) comporte un moyen de blocage (50).

11. Transmission selon la revendication 5, ladite transmission comportant en outre un différentiel de sortie (20), et la liaison entre le différentiel de sortie (20) et la machine hydraulique (2) comportant un réducteur de vitesse (6, 12) donnant quand la machine hydraulique (2) entraîne les roues motrices (22), une réduction de la vitesse de rotation de la machine hydraulique (2).

12. Véhicule automobile hybride disposant d'une transmission (1) comportant un train planétaire (30) relié à un moteur thermique (34) et à une pompe hydraulique (64), **caractérisé en ce que** cette transmission est réalisée selon l'une quelconque des revendications 5 à 11.


**Patentansprüche**

1. Verfahren zum Beurteilen des Schallpegels einer hydraulischen Maschine mit Axialkolben, die in einem Getriebe für ein hydraulisches Hybridfahrzeug angeordnet ist, die ein epizyklisches Zahnradgetriebe (30) umfasst, das als Differenzial arbeiten kann, das ein erstes Element (32) umfasst, das mit einem Verbrennungsmotor (34) verbunden ist, ein zweites Element (40), das mit den Antriebsrädern (22) verbunden ist, und ein drittes Element (36), das mit einer hydraulischen Pumpe (64) verbunden ist, wobei dieses Zahnradgetriebe (1) außerdem ein Mittel zum Antreiben der Antriebsräder (8) durch eine hydraulische Maschine (2) umfasst, und die Verbindung zwischen dem dritten Element (36) des Planetengetriebes (30) und der hydraulischen Pumpe (64) einen Drehzahlminderer (38, 60) umfasst, der, wenn dieses gesamte Getriebe mit derselben Drehzahl dreht, eine Untersetzung der Drehzahl der Pumpe in Bezug auf die des Verbrennungsmotors (34) gibt, wobei das Verfahren das Beurteilen dieses Schallpegels erlaubt, indem es die Drehzahl sowie den Hubraum dieser Maschine kennt, **dadurch gekennzeichnet, dass** es diesen Pegel durch eine Formel des folgenden Typs berechnet:

$$X \times Log10 \text{ (Drehzahl in U/Min.)} + Y \times Log10 \text{ (Hubraum in cm}^3) + K = \text{Schallpegel in dBa;}$$

mit einer Konstante K, die von der Technologie, die für diese Maschine verwendet wird, abhängt.

2. Beurteilungsverfahren des Schallpegels nach Anspruch 1, **dadurch gekennzeichnet, dass** der Wert "X" im Wesentlichen gleich zwanzig ist, und der Wert "Y" im Wesentlichen gleich drei ist.

3. Beurteilungsverfahren des Schallpegels nach Anspruch 1 oder 2, **dadurch gekennzeichnet, dass** die Konstante "K" zwischen fünf und fünfzehn liegt.

4. Beurteilungsverfahren des Schallpegels nach Anspruch 1, **dadurch gekennzeichnet, dass** das Getriebe außerdem ein Ausgangsdifferenzial (20) umfasst, und dass die Verbindung zwischen dem Ausgangsdifferenzial (20) und der hydraulischen Maschine (2) einen Drehzahlminderer (6, 12) umfasst, der, wenn die hydraulische Maschine (2) die Antriebsräder (22) antreibt, eine Untersetzung der Drehzahl der hydraulischen Maschine (2) gibt.

5. Getriebe für ein hydraulisches Hybridkraftfahrzeug, das ein epizyklisches Zahnradgetriebe (30) umfasst, das als Differenzial arbeiten kann, das ein erstes Element (32) umfasst, das mit einem Verbrennungsmotor (34) verbunden ist, ein zweites Element (40), das mit den Antriebsrädern (22) verbunden ist, und ein drittes Element (36), das mit einer hydraulischen Pumpe (64) verbunden ist, wobei dieses Getriebe (1) außerdem ein Mittel zum Antreiben der Antriebsräder (8) durch eine hydraulische Maschine (2) umfasst, und die Verbindung zwischen dem dritten Element (36) des epizyklischen Zahnradgetriebes (30) und der Pumpe (64) einen Drehzahlminderer (38, 60) umfasst, der, wenn die Einheit dieses epizyklischen Zahnradgetriebes mit derselben Drehzahl dreht, eine Untersetzung der Drehzahl der Pumpe in Bezug auf die des Verbrennungsmotors (34) gibt, Getriebe **dadurch gekennzeichnet, dass** der Wert der Untersetzung in Abhängigkeit von einem Schallpegel der hydraulischen Maschine (2) ausgewählt wird, der gemäß einem Verfahren nach Anspruch 1, 2 oder 3 beurteilt wird.

6. Getriebe nach Anspruch 5, **dadurch gekennzeichnet, dass** der Drehzahlminderer zwei parallele Wellen (52, 62) umfasst, die den Eingang und den Ausgang dieses Minderers bilden.

7. Getriebe nach Anspruch 6, **dadurch gekennzeichnet, dass** die Eingangswelle des Minderers (52), die direkt mit dem dritten Element (36) des epizyklischen Zahnradgetriebes (30) verbunden ist, ein Ritzel (38) umfasst, das in ein Ritzel (60) eingreift, das von einer Welle (62) getragen wird, die direkt mit der Pumpe (64) verbunden ist, wobei dieses Ritzelpaar das Untersetzungsverhältnis gibt.

8. Getriebe nach einem der Ansprüche 5 bis 7, **dadurch gekennzeichnet, dass** das Untersetzungsverhältnis etwa 2,2 beträgt.

9. Getriebe nach einem der Ansprüche 5 bis 8, **dadurch gekennzeichnet, dass** das erste Element des epizyklischen Zahnradgetriebes (30) der Kranz (32) ist, das zweite Element der Satellitenträger (40) ist, und das dritte Element das Sonnenrad (36) ist.

10. Getriebe nach einem der vorhergehenden Ansprüche, **dadurch gekennzeichnet, dass** das epizyklische Zahnradgetriebe (30) ein Blockierungsmittel (50) umfasst.

11. Getriebe nach Anspruch 5, wobei das Getriebe außerdem ein Ausgangsdifferenzial (20) umfasst, und die Verbindung zwischen dem Ausgangsdifferenzial (20) und der hydraulischen Maschine (2) einen Drehzahlminderer (6, 12) umfasst, der, wenn die hydraulische Maschine (2) die Antriebsräder (22) antreibt, eine Untersetzung der Drehzahl der hydraulischen Maschine (2) gibt.

12. Hybridkraftfahrzeug, das über ein Getriebe (1) verfügt, das ein epizyklisches Zahnradgetriebe (30) umfasst, das mit einem Verbrennungsmotor (34) und mit einer hydraulischen Pumpe (64) verbunden ist, **dadurch gekennzeichnet, dass** dieses Getriebe nach einem der Ansprüche 5 bis 11 hergestellt ist.

## Claims

1. Method for evaluating the noise level of a hydraulic axial piston machine disposed in a transmission for a hydraulic hybrid motor vehicle, comprising a planetary gear train (30) which can work in a differential, comprising a first member (32) connected to a combustion engine (34), a second member (40) connected to the drive wheels (22), and a third member (36) connected to a hydraulic pump (64), said transmission (1) further comprising a means (8) for driving the drive wheels via a hydraulic machine (2), and the connection between the third member (36) of the planetary gear train (30) and the hydraulic pump (64) having a speed reducer (38, 60) which causes a reduction in the rotational speed of the pump relative to that of the combustion engine (34) when the train assembly rotates at the same speed, said method enabling this noise level to be evaluated by knowing the rotation speed and the cubic capacity of said machine, **characterized in that** it calculates this level with a formula of the type:
   $X \times Log10$ (speed in rpm) $+ Y \times Log10$ (cubic capacity in $cm^3$) $+ K =$ sound level in dBa; with a constant K depending on the technology used for this machine.

2. Method for evaluating the noise level according to Claim 1, **characterized in that** the value "X" is substantially equal to twenty, and the "Y" value is substantially equal to three.

3. Method for evaluating the noise level according to Claim 1 or 2, **characterized in that** the constant "K" is between five and fifteen.

4. Method for evaluating the noise level according to Claim 1, **characterized in that** said transmission further includes an output differential (20), and the connection between the output differential (20) and the hydraulic machine (2) comprises a speed reducer (6,12) which causes a reduction in the speed of rotation of the hydraulic machine (2) when the hydraulic machine (2) drives the driving wheels (22).

5. Transmission for a hydraulic hybrid motor vehicle, comprising a planetary gear train (30) which can work in a differential, comprising a first member (32) connected to a combustion engine (34), a second member (40) connected to the drive wheels (22), and a third member (36) connected to a hydraulic pump (64), said transmission (1) further comprising a means (8) for driving the drive wheels via a hydraulic machine (2), and the connection between the third member (36) of the planetary gear train (30) and the hydraulic pump (64) having a speed reducer (38, 60) which causes a reduction in the rotational speed of the pump relative to that of the combustion engine (34) when the train assembly rotates at the same speed, said transmission being **characterized in that** the value of said reduction is selected on the basis of a sound level of the hydraulic machine (2) evaluated by means of a method according to Claim 1, 2 or 3.

6. Transmission according to Claim 5, **characterized in that** the speed reducer comprises two parallel shafts (52, 62) forming the input and the output of said reducer.

7. Transmission according to Claim 6, **characterized in that** the reducer input shaft (52) is directly attached to the third member (36) of the planetary gear train (30) and carries a pinion (38) which meshes with a pinion (60) carried by a shaft (62) directly connected to the pump (64), this pinion pair determining the reduction ratio.

8. Transmission according to any one of Claims 5 to 7, **characterized in that** the reduction ratio is about 2.2.

9. Transmission according to any one of Claims 5 to 8, **characterized in that** the first member of the planetary gear train (30) is the crown gear (32), the second member is the planet carrier (40), and the third member is the sun gear (36).

10. Transmission according to any one of the preceding claims, **characterized in that** the planetary gear train (30) comprises a locking means (50).

11. Transmission according to Claim 5, said transmission further including an output differential (20), and wherein the connection between the output differential (20) and the hydraulic machine (2) comprises a speed reducer (6, 12) which causes a reduction in the speed of rotation of the hydraulic machine (2) when the hydraulic machine (2) drives the driving wheels (22).

12. Hybrid motor vehicle having a transmission (1) comprising a planetary gear train (30) connected to a combustion engine (34) and a hydraulic pump (64), **characterized in that** said transmission is constructed according to any of claims 5 to 11.

Fig. 1

**EP 2 997 287 B1**

## RÉFÉRENCES CITÉES DANS LA DESCRIPTION

### Documents brevets cités dans la description

• FR 2973302 A1